# EUROPÄISCHE PATENTSCHRIFT

(11) **EP 4 216 774 B1**
(45) Veröffentlichungstag und Bekanntmachung des Hinweises auf die Patenterteilung: **04.12.2024**
(21) Anmeldenummer: 21769378.7
(22) Anmeldetag: 24.08.2021
(51) Int. Cl.: A47J 36/16

(54) **GARGESCHIRR**
COOKING VESSEL
RÉCIPIENT DE CUISSON

(30) Priorität: 22.09.2020 DE 102020124615
(43) Veröffentlichungstag der Anmeldung: 02.08.2023
(73) Patentinhaber: Miele & Cie. KG, 33332 Gütersloh (DE)
(72) Erfinder: MÜLLER, Christoph, 32289 Rödinghausen (DE); HÖLSCHER, Britta, 30167 Hannover (DE); GEHRING, Nils Marius, 33739 Bielefeld (DE)
(86) Internationale Anmeldenummer: PCT/EP2021/073375
(87) Internationale Veröffentlichungsnummer: WO 2022/063506

(56) Entgegenhaltungen:
- EP-A1- 0 743 036
- CA-A1- 2 924 864
- CN-A- 109 380 983
- DE-A1- 102013 006 649
- GB-A- 345 764
- KR-Y1- 200 349 170

## Beschreibung

Die Erfindung betrifft ein Gargeschirr der im Oberbegriff des Patentanspruchs 1 genannten Art.

Derartige Gargeschirre sind aus dem Stand der Technik in einer Vielzahl von Ausführungsformen bereits vorbekannt. So offenbart die Druckschrift DE 10 2013 006 649 A1 beispielsweise einen Geschirrkörper und mindestens einen an dem Geschirrkörper angeordneten Griff, wobei der Geschirrkörper einen in der Gebrauchslage des Gargeschirrs nach oben offenen Gargutaufnahmeraum zur Aufnahme eines Garguts begrenzt.

Aus der Druckschrift US 2010/0116819 A1 ist ein Gargeschirr mit einer Induktionsspule zur Übertragung elektrischer Energie an das Gargeschirr bekannt.

Die Druckschrift US 2009/0065500 A1 offenbart ein doppelwandiges Gargeschirr mit einem Isoliermittel zwischen den beiden Wandungen. Ein weiteres Gargeschirr ist aus CA 2 924 864 A1 bekannt.

Der Erfindung stellt sich das Problem, ein derartiges Gargeschirr zu verbessern. Erfindungsgemäß wird dieses Problem durch ein Gargeschirr mit den Merkmalen des Patentanspruchs 1 gelöst. Das erfindungsgemäße Gargeschirr ist dabei nach Art, Funktionsweise, Material, Dimensionierung und Form in weiten geeigneten Grenzen frei wählbar. Beispielsweise kann es sich bei dem Gargeschirr um einen Kochtopf, einen Bräter oder eine Bratpfanne handeln. Das erfindungsgemäße Gargeschirr kann für den Einsatz auf einem Induktionskochfeld, einem Gaskochfeld oder einem Massekochfeld mit einem Strahlungsheizkörper geeignet ausgebildet sein. Der in der Gebrauchslage des Gargeschirrs nach oben offene Gargutaufnahmeraum des erfindungsgemäßen Gargeschirrs kann während des Gebrauchs des Gargeschirrs, also beispielsweise während des Garvorgangs mittels des Gargeschirrs, auf dem Fachmann bekannte Weise mittels eines Deckels oder dergleichen abgedeckt werden. Dies ist jedoch nicht zwingend erforderlich und wird von einem Benutzer des Gargeschirrs je nach den Erfordernissen des Einzelfalls angewandt. Der mindestens eine Griff kann bei dem erfindungsgemäßen Gargeschirr beispielsweise als ein integraler Bestandteil der Außenschale ausgebildet sein. Denkbar ist auch, dass der mindestens eine Griff als ein separates Bauteil ausgebildet ist, wobei der Griff bei der Herstellung des erfindungsgemäßen Gargeschirrs, also bei der Überführung in dessen Montagezustand, auf dem Fachmann bekannte Weise mit der Außenschale verbunden wird. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Gargeschirr, umfassend einen Geschirrkörper und mindestens einen an dem Geschirrkörper angeordneten Griff, wobei der Geschirrkörper einen in der Gebrauchslage des Gargeschirrs nach oben offenen Gargutaufnahmeraum zur Aufnahme eines Garguts begrenzt, verbessert ist. Aufgrund der erfindungsgemäßen Ausbildung des Gargeschirrs ist eine funktionale Trennung zwischen der Außenschale auf der einen Seite und der Inneschale auf der anderen Seite ermöglicht. Entsprechend können sowohl die Außenschale wie auch die Innenschale auf deren spezielle Anforderungen angepasst ausgebildet sein. Beispielsweise ist dies bei der Materialauswahl für die Außenschale und die Innenschale vorteilhaft nutzbar. Denkbar ist ferner, dass die Außenschale als der Teil des Geschirrkörpers verwendet wird, an oder in dem die gesamte Elektronik des erfindungsgemäßen Gargeschirrs angeordnet ist. Dies ist insbesondere bei besonders hochwertig ausgestatteten Gargeschirren mit einer Vielzahl von elektronischen Funktionen, wie beispielsweise Bedien- und Anzeigefunktionen für das Gargeschirr und/oder für ein Kochfeld, mit dem das Gargeschirr ein System zum Garen des in dem Gargutaufnahmeraum des Gargeschirrs befindlichen Garguts bildet, sowie Sensorik zur Erfassung von Gargeschirrparametern und/oder Gargutparametern vorteilhaft. Im Unterschied zu der vorgenannten, hochfunktionalen Außenschale kann die Innenschale dann beispielsweise möglichst geeignet für die Gargutaufnahme und/oder die Reinigung und Pflege des Gargutaufnahmeraums ausgebildet sein. Darüber hinaus ist es möglich, zwischen der Außenschale auf der einen Seite und der Innenschale auf der anderen Seite einen Hohlraum vorzusehen, der dann beispielsweise zusätzlich für mindestens eine weitere Funktionalität genutzt werden kann.

Eine besonders vorteilhafte Weiterbildung des erfindungsgemäßen Gargeschirrs sieht vor, dass die Innenschale in dem Montagezustand des Gargeschirrs lösbar mit der Außenschale verbunden ist, bevorzugt, dass die Innenschale und die Außenschale zueinander korrespondierende Formschlussmittel zur Ausbildung der lösbaren Verbindung aufweisen, besonders bevorzugt, dass die zueinander korrespondierenden Formschlussmittel als Bajonettverschlussmittel zur Bildung eines Bajonettverschlusses ausgebildet sind. Hierdurch ist es zum einen möglich, eine Außenschale für eine Mehrzahl von Innenschalen zu verwenden. Dies ist beispielsweise im Produktionsprozess ein wesentlicher Vorteil, da man damit eine Vielzahl von Varianten von erfindungsgemäßen Gargeschirren mit einer einzigen Art von Außenschale abdecken kann. Beispielsweise können sich die Innenschalen der jeweiligen erfindungsgemäßen Gargeschirre darin unterscheiden, ob diese mit oder ohne eine Antihaftbeschichtung ausgestattet sind. Auch können sich die Innenschalen derartiger erfindungsgemäßer Gargeschirre durch das verwendete Material, beispielsweise Edelstahl, unterscheiden. Andererseits ist eine derartige Kombinationsmöglichkeit von einer Außenschale mit einer Mehrzahl von dazu korrespondierenden Innenschalen auch auf der Seite der Benutzer denkbar. Beispielsweise könnte der Benutzer, je nach den Erfordernissen des Einzelfalls, die Innenschale des erfindungsgemäßen Gargeschirrs wechseln. Auch könnten derartige Innenschalen im Vergleich zu einem vollständigen erfindungsgemäßen Gargeschirr wesentlich günstiger verkauft werden.

Die lösbare Verbindung zwischen der Außenschale und der Innenschale ist dabei auf jede sinnvolle und dem Fachmann bekannte Weise realisierbar. Die bevorzugte Ausführungsform dieser Weiterbildung hat ferner den Vorteil, dass die lösbare Verbindung auf konstruktive und fertigungstechnisch einfache und robuste Art und Weise realisiert ist. Darüber hinaus hat die besonders bevorzugte Ausführungsform dieser Weiterbildung den weiteren Vorteil, dass mittels des Bajonettverschlusses die Innenschale besonders innig mit der Außenschale verbindbar ist, da die Innenschale bei der Herstellung der Bajonettverschlusses fest an die Außenschale anziehbar ist. Grundsätzlich ist es jedoch auch denkbar, dass die Außenschale und die Innenschale bei der Herstellung des erfindungsgemäßen Gargeschirrs auf dem Fachmann bekannte Weise unlösbar verbunden werden.

Das erfindungsgemäße Gargeschirr sieht vor, gemäß einer Variante, dass eine in dem Montagezustand des Gargeschirrs der Innenschale zugewandte Wandinnenseite der Außenschale und eine in dem Montagezustand des Gargeschirrs der Außenschale zugewandte Wandaußenseite der Innenschale jeweils zueinander korrespondierend konisch ausgebildet sind. Auf diese Weise ist ein Fügen der Außenschale und der Innenschale zur Herstellung des erfindungsgemäßen Gargeschirrs wesentlich vereinfacht. Auch sind dabei im Produktionsprozess unvermeidbare Bauteiltoleranzen weniger kritisch, so dass die Außenschale und die Innenschale mit größeren Bauteiltoleranzen fertigbar sind. Ferner ist durch diese Weiterbildung eine innige Verbindung zwischen der Außenschale auf der einen Seite und der Innenschale auf der anderen Seite auf konstruktiv und fertigungstechnisch einfache Art ermöglicht.

Das erfindungsgemäße Gargeschirr gemäß der Variante, dass die Außenschale an einer der Innenschale zugewandten Bodeninnenseite eines Bodens der Außenschale und die Innenschale an einer der Außenschale zugewandten Bodenaußenseite eines Bodens der Innenschale jeweils zueinander korrespondierende und in dem Montagezustand des Gargeschirrs miteinander in Eingriff befindliche Zentriermittel aufweisenHierdurch ist ein ordnungsgemäßer und damit funktionssicherer Zusammenbau des erfindungsgemäßen Gargeschirrs wesentlich gefördert.

Dieser Vorteil gilt insbesondere für die bevorzugte Ausführungsform dieser Weiterbildung, bei welcher die Zentriermittel zentrisch an dem jeweiligen Boden angeordnet sind.

Ein Aspekt ist es, dass die Innenschale und die Außenschale bei Erreichen der Endlage eines montierten Zustands miteinander verrasten. Dabei muss eine Schließkraft überwunden werden. Gemäß einer Ausführungsform kann die Verrastung bei überwinden einer Öffnungskraft wieder gelöst werden. Vorzugsweise ist die Größe der Schließkraft gleich oder kleiner der Größe der Öffnungskraft.

Eine weitere vorteilhafte Weiterbildung des erfindungsgemäßen Gargeschirrs sieht vor, dass in dem Montagezustand des Gargeschirrs zwischen der Außenschale und der Innenschale eine umlaufende Dichtung angeordnet ist. Auf diese Weise ist gewährleistet, dass Flüssigkeit oder Schmutz nicht in ungewünschter Weise zwischen die Außenschale und die Innenschale gelangen können. Entsprechend ist hiermit die ordnungsgemäße Funktion des erfindungsgemäßen Gargeschirrs auch über einen langen Gesamtbenutzungszeitraum, also eine lange Lebenszeit des erfindungsgemäßen Gargeschirrs, sichergestellt. Auch ist dadurch die Reinigung und Pflege des erfindungsgemäßen Gargeschirrs wesentlich vereinfacht.

Eine andere vorteilhafte Weiterbildung des erfindungsgemäßen Gargeschirrs sieht vor, dass das Gargeschirr als ein Induktionsgargeschirr ausgebildet ist, wobei an einem Boden der Außenschale eine mit einer Steuerung des Gargeschirrs elektrisch leitend verbundene Induktionsspule zur induktiven Kopplung mit einem Induktionskochfeld angeordnet ist, bevorzugt, dass die Induktionsspule an einer der Innenschale zugewandten Bodeninnenseite des Bodens angeordnet ist, wobei die Außenschale aus einem elektrisch nicht leitfähigen Material ausgebildet ist. Hierdurch ist zum einen die Verwendung des erfindungsgemäßen Gargeschirrs auf einem als Induktionskochfeld ausgestatteten Kochfeld ermöglicht. Zum anderen kann eine Elektronik des erfindungsgemäßen Gargeschirrs mittels der Induktionsspule des Gargeschirrs mit Energie versorgt werden, so dass beispielsweise ein in dem erfindungsgemäßen Gargeschirr angeordneter Energiespeicher zur Versorgung der vorgenannten Elektronik mit elektrischer Energie mittels einer induktiven Kopplung zwischen der Induktionsspule des erfindungsgemäßen Gargeschirrs und einer Heizspule des Induktionskochfelds, auf dem das erfindungsgemäße Gargeschirr aufgestellt ist, aufladbar ist. Die bevorzugte Ausführungsform dieser Weiterbildung hat darüber hinaus den Vorteil, dass die Induktionsspule vor Umwelteinflüssen geschützt in einem Inneren des erfindungsgemäßen Gargeschirrs angeordnet ist. Bei dem elektrisch nicht leitfähigen Material der Außenschale gemäß der bevorzugten Ausführungsform dieser Weiterbildung kann es sich beispielsweise um ein elektrisch nichtleitendes Metall handeln.

Eine besonders vorteilhafte Weiterbildung des erfindungsgemäßen Gargeschirrs sieht vor, dass die Innenschale oder die Innenschale und die Außenschale aus einem spülmaschinengeeigneten Material ausgebildet ist/sind. Auf diese Weise ist die Reinigung und die Pflege des erfindungsgemäßen Gargeschirrs zusätzlich erleichtert und damit wesentlich benutzerfreundlicher gestaltet. Die erstgenannte Alternative dieser Weiterbildung, bei der lediglich die Innenschale spülmaschinengeeignet ausgebildet ist, ist dann sinnvoll, wenn die Außenschale und die Innenschale lösbar miteinander verbindbar sind.

Das erfindungsgemäße Gargeschirr sieht vor, gemäß einer weiteren Variante, dass das Gargeschirr mindestens eine Mehrzahl von mit einer Steuerung des Gargeschirrs signalübertragend verbundenen Sensoren aufweist.

Hierdurch ist eine Erfassung von Gargeschirrparametern und/oder von Gargutparametern, wie beispielsweise einer Temperatur der Innenschale des Gargeschirrs, ermöglicht, wobei der mindestens eine Sensor baulich der Außenschale zugeordnet ist. Somit ist die Aufteilung des erfindungsgemäßen Gargeschirrs in funktionaler Hinsicht vorteilhaft genutzt, da die Innenschale entsprechend freier gestaltet werden kann.

Ein Aspekt ist es, dass der mindestens eine Sensor an einer, jeweils der Innenschale zugewandten, Wandinnenseite und/oder Bodeninnenseite der Außenschale angeordnet ist, besonders bevorzugt, dass der mindestens eine Sensor an der Außenschale elastisch angeordnet ist. Dies hat zum Vorteil, dass der Sensor zum einen vor die Funktion des Sensors beeinträchtigenden Umwelteinflüssen geschützt ist und zum anderen in innigem Kontakt mit der Außenschale und/oder der Innenschale an der Außenschale anordenbar ist. Dies gilt insbesondere für die besonders bevorzugte Ausführungsform dieser Weiterbildung. Unter einer elastischen Anordnung des mindestens einen Sensors an der Außenschale ist zu verstehen, dass der mindestens eine Sensor elastisch relativ zu der Außenschale beweglich an der Außenschale angeordnet ist.

Das erfindungsgemäße Gargeschirr sieht vor, gemäß der weiteren Variante, dass das Gargeschirr eine Mehrzahl von Sensoren aufweist, insbesondere, dass der mindestens eine Sensor als eine Mehrzahl von Sensoren ausgebildet ist, wobei die mehreren Sensoren über eine Höhe der Wandinnenseite der Außenschale verteilt sind. Durch die Verwendung einer Mehrzahl von Sensoren ist eine qualitativ hochwertige Erfassung der vorgenannten Parameter ermöglicht ist. Insbesondere ist vorgesehen, dass das Gargeschirr wenigstens zwei Sensoren aufweist. Gemäß einer bevorzugten Ausgestaltung ist eine Anzahl von 3 bis 9 Sensoren vorgesehen, welche insbesondere einen gleichen Abstand zueinander aufweisen.

Die Mehrzahl von Sensoren sind an einem in Richtung des Bodens der Außenschale auseinanderlaufenden Keil angeordnet, insbesondere wobei der Keil als ein elastischer Keil ausgebildet und an der Außenschale befestigt ist und/oder elastisch an der Außenschale befestigt ist. Auf diese Weise ist der mit dem mindestens einen Sensor erfasste Gargeschirrparameter und/oder Gargutparameter, beispielsweise die vorgenannte Temperatur der Innenschale des erfindungsgemäßen Gargeschirrs, zum einen über die Höhe verteilt ermittelbar. Zum anderen gelangen die über die Höhe verteilt angeordneten Sensoren mittels des Keils, trotz beispielsweise etwaiger Bauteiltoleranzen, in innigen Kontakt mit der Innenschale des erfindungsgemäßen Gargeschirrs, so dass mittels der Gesamtheit der Sensoren eine qualitativ hochwertige Erfassung der vorgenannten Parameter ermöglicht ist.

Besonders eignet sich diese Ausbildung des Gargeschirrs in Verbindung mit der Weiterbildung wonach die in dem Montagezustand des Gargeschirrs der Innenschale zugewandte Wandinnenseite der Außenschale und die in dem Montagezustand des Gargeschirrs der Außenschale zugewandte Wandaußenseite der Innenschale jeweils zueinander korrespondierend konisch ausgebildet sind.

Eine andere vorteilhafte Weiterbildung des erfindungsgemäßen Gargeschirrs sieht vor, dass in dem Montagezustand des Gargeschirrs zwischen der Außenschale und der Innenschale ein thermisches Isoliermittel angeordnet ist, bevorzugt, dass das thermische Isoliermittel zwischen einer Bodeninnenseite der Außenschale und einer Bodenaußenseite der Innenschale angeordnet ist, besonders bevorzugt, dass das thermische Isoliermittel als ein Aerogel ausgebildet ist. Hierdurch ist eine wärmetechnische Entkopplung der Außenschale auf der einen Seite von der Innenschale auf der anderen Seite auf konstruktiv und fertigungstechnisch einfache Art und Weise ermöglicht. Dies gilt besonders für die bevorzugte und insbesondere für die besonders bevorzugte Ausführungsform dieser Weiterbildung. Eine derartige wärmetechnische Entkopplung ist beispielsweise dann sinnvoll oder gar erforderlich, wenn ein als Induktionsgargeschirr ausgebildetes erfindungsgemäßes Gargeschirr auf einem als voll integriertes Induktionskochfeld ausgebildeten Kochfeld betrieben werden soll. Derartige voll integrierte Induktionskochfelder sollen sich homogen in einen Wohnraum oder dergleichen einfügen, wobei die diesbezügliche Technik dieser Induktionskochfelder unter einer Stein-, Granit-, Keramikplatte oder dergleichen angeordnet ist. Entsprechend muss die Temperatur an einer dem vollintegrierten Induktionskochfeld zugewandten Bodenaußenseite eines Bodens des erfindungsgemäßen Gargeschirrs auf 120°C oder weniger begrenzbar sein.

Hierfür kann es, alternativ oder zusätzlich zu der vorgenannten Ausführungsform des erfindungsgemäßen Gargeschirrs, in einer weiteren vorteilhaften Weiterbildung des erfindungsgemäßen Gargeschirrs vorgesehen sein, dass die Außenschale auf einer in dem Montagezustand des Gargeschirrs der Innenschale abgewandten Bodenaußenseite des Bodens mindestens eine Nut aufweist, bevorzugt, dass die Nut derart ausgebildet und angeordnet ist, dass bei auf einem Kochfeld aufgestellten Gargeschirr Luft aus einer freien Umgebung mittels der Nut zwischen den Boden der Außenschale des Gargeschirrs und dem Kochfeld gelangt.

Ein Ausführungsbeispiel der Erfindung ist in den Zeichnungen rein schematisch dargestellt und wird nachfolgend näher beschrieben. Es zeigt
- Figur 1: die Außenschale des erfindungsgemäßen Gargeschirrs gemäß dem vorliegenden Ausführungsbeispiel in einer perspektivischen Einzeldarstellung,
- Figur 2: die Innenschale des erfindungsgemäßen Gargeschirrs gemäß dem vorliegenden Ausführungsbeispiel in einer perspektivischen Einzeldarstellung,
- Figur 3a: das Ausführungsbeispiel des erfindungsgemäßen Gargeschirrs in dessen Montagezustand, in einer ersten geschnittenen Seitenansicht,
- Figur 3b: eine Detailansicht des Ausführungsbeispiels gemäß der Fig. 3a, im Bereich des Bajonettverschlusses,
- Figur 4a: das Ausführungsbeispiel des erfindungsgemäßen Gargeschirrs in dessen Montagezustand, in einer zweiten geschnittenen Seitenansicht und
- Figur 4b: eine Detailansicht des Ausführungsbeispiels gemäß der Fig. 4a, im Bereich der Sensoren.

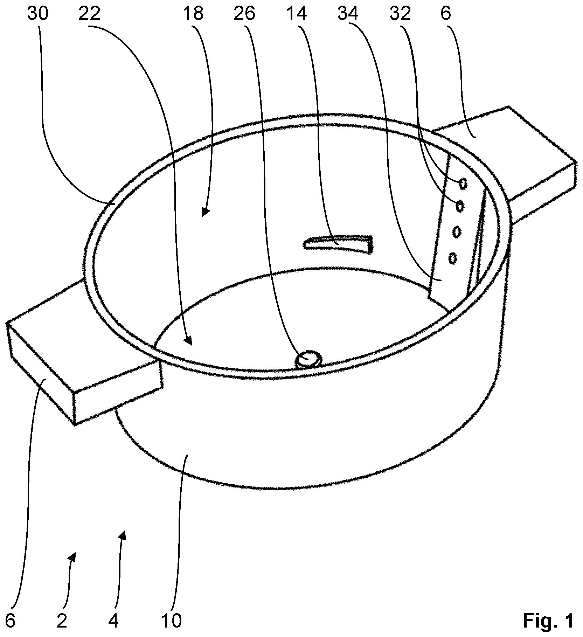

In den Fig. 1 bis 4b ist ein Ausführungsbeispiel des erfindungsgemäßen Gargeschirrs rein exemplarisch dargestellt.

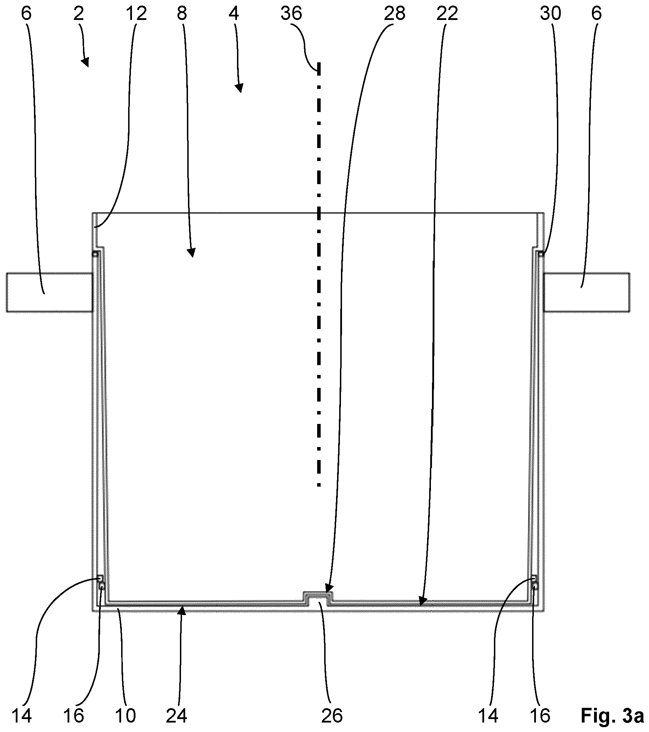

Das Gargeschirr 2 ist als ein Induktionskochtopf zur Verwendung auf einem als Induktionskochfeld ausgebildeten, nicht dargestellten Kochfeld ausgebildet. Das Gargeschirr 2 umfasst einen Geschirrkörper 4 und zwei an dem Geschirrkörper 4 angeordnete Griffe 6, wobei der Geschirrkörper 4 einen in einer in den Fig. 3a bis 4b dargestellten Gebrauchslage des Gargeschirrs 2 nach oben offenen Gargutaufnahmeraum 8 zur Aufnahme eines nicht dargestellten Garguts begrenzt.

Der Geschirrkörper 4 umfasst erfindungsgemäß eine mit den Griffen 6 verbindbare Außenschale 10 und eine in einem in den Fig. 3a bis 4b gezeigten Montagezustand des Gargeschirrs 2 mit der Außenschale 10 verbundene Innenschale 12, wobei die Außenschale 10 die Innenschale 12 in dem Montagezustand des Gargeschirrs 2 aufnimmt und der Gargutaufnahmeraum 8 in der Innenschale 12 ausgebildet ist. Die Außenschale 10 ist bei dem vorliegenden Ausführungsbeispiel aus einem elektrisch nicht leitfähigen, also nichtleitenden, Material hergestellt, wohingegen die Innenschale 12 aus einem spülmaschinengeeigneten Material, nämlich Edelstahl, ausgebildet ist.

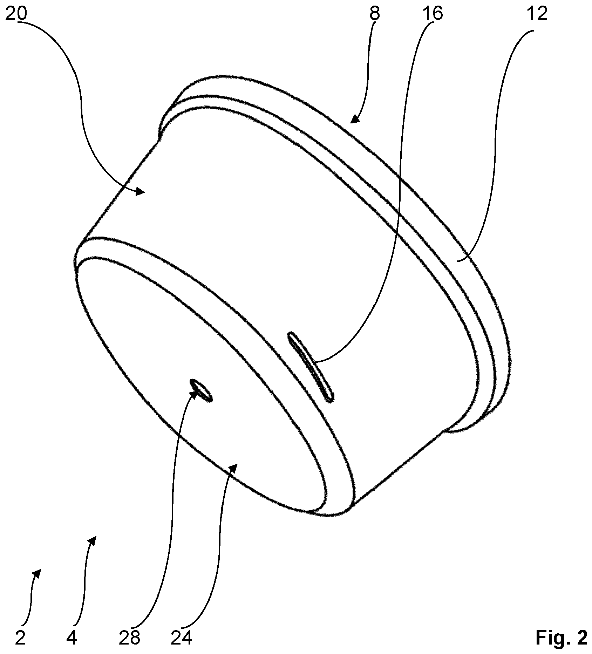

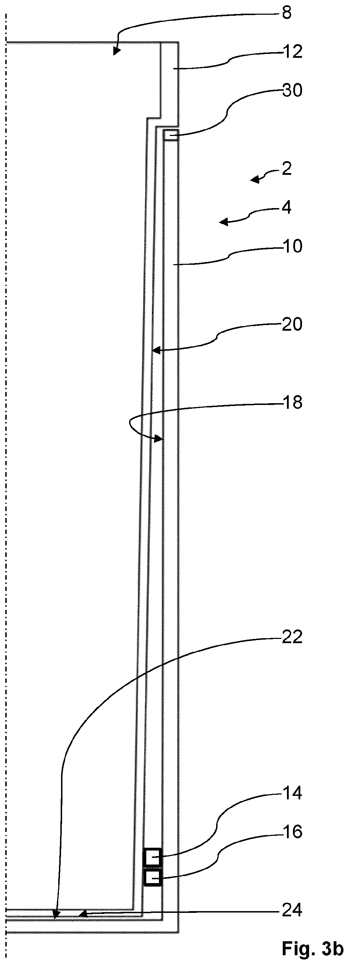

Die Innenschale 12 ist in dem Montagezustand des Gargeschirrs 2 lösbar mit der Außenschale 10 verbunden, wobei die Innenschale 12 und die Außenschale 10 zueinander korrespondierende Formschlussmittel zur Ausbildung der lösbaren Verbindung aufweisen, nämlich dahingehend, dass die zueinander korrespondierenden Formschlussmittel als Bajonettverschlussmittel 14, 16 zur Bildung eines Bajonettverschlusses ausgebildet sind. Bei dem vorliegenden Ausführungsbeispiel sind die zueinander korrespondierenden Bajonettverschlussmittel 14, 16 als zum einen zwei an einander gegenüberliegenden Wandinnenseiten 18 einer Wand der Außenschale 10 angeordnete, keilförmige Vorsprünge und zum anderen als zwei zu den vorgenannten keilförmigen Vorsprüngen korrespondierend ausgebildete an einander gegenüberliegenden Wandaußenseiten 20 einer Wand der Innenschale 12 ausgebildete, längliche Vorsprünge ausgebildet. Siehe hierzu die Fig. 1 und 2 in Verbindung mit der Fig. 3a und 3b.

Ferner sind die in dem Montagezustand des Gargeschirrs 2 der Innenschale 12 zugewandte Wandinnenseite 18 der Außenschale 10 und die in dem Montagezustand des Gargeschirrs 2 der Außenschale 10 zugewandte Wandaußenseite 20 der Innenschale 12 jeweils zueinander korrespondierend konisch ausgebildet. Siehe hierzu die Fig. 3a bis 4b.

Darüber hinaus weisen die Außenschale 10 an einer der Innenschale 12 zugewandten Bodeninnenseite 22 eines Bodens der Außenschale 10 und die Innenschale 12 an einer der Außenschale 10 zugewandten Bodenaußenseite 24 eines Bodens der Innenschale 12 jeweils zueinander korrespondierende und in dem Montagezustand des Gargeschirrs 2 miteinander in Eingriff befindliche Zentriermittel 26, 28 auf, wobei die Zentriermittel 26, 28 zentrisch an dem jeweiligen Boden angeordnet sind. Die Zentriermittel 26, 28 sind bei dem vorliegenden Ausführungsbeispiel als ein sich aus der Bodeninnenseite 22 des Bodens der Außenschale 10 erhebender Zentrierdorn und eine in der Bodenaußenseite 24 des Bodens der Innenschale 12 angeordnete Zentrieraufnahme ausgebildet. Siehe hierzu die Fig. 1 und 2 sowie 3a und 4a.

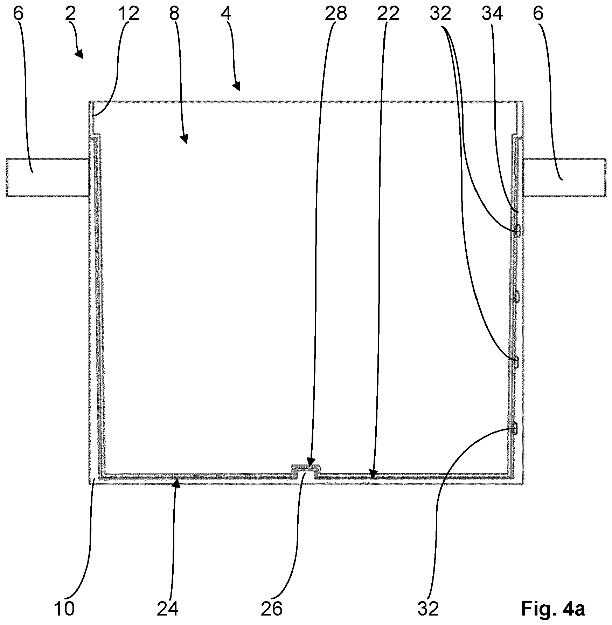

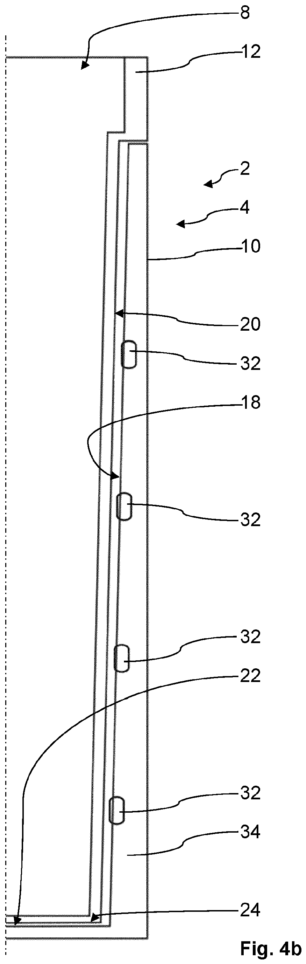

Um in dem Montagezustand des Gargeschirrs 2 einen Zwischenraum zwischen der Außenschale 10 auf der einen Seite und der Innenschale 12 auf der anderen Seite flüssigkeitsdicht und staubdicht zu verschließen, ist in dem in den Fig. 3a bis 4b dargestellten Montagezustand des Gargeschirrs 2 zwischen der Außenschale 10 und der Innenschale 12 eine umlaufende Dichtung 30 angeordnet. Die Dichtung 30 kann beispielsweise als eine Silikondichtung ausgebildet sein. Ferner kann die Dichtung 30 auf dem Fachmann bekannte Weise beispielsweise an der Außenschale 10 befestigt sein oder als ein integraler Bestandteil der Außenschale 10 ausgebildet sein. Siehe hierzu beispielsweise die Fig. 3a und 3b. In den Fig. 2, 4a und 4b ist die Dichtung nicht dargestellt.

Wie oben bereits ausgeführt, ist das Gargeschirr 2 als ein Induktionsgargeschirr ausgebildet. Um beispielsweise eine in einem der beiden Griffe 6 angeordnete Steuerung und mit der Steuerung stromleitend verbundene Bedien- und/oder Anzeigeelemente des Gargeschirrs 2 mit elektrischen Strom zu versorgen, ist bei dem vorliegenden Ausführungsbeispiel an dem Boden der Außenschale 10 eine mit der Steuerung des Gargeschirrs 2 elektrisch leitend verbundene Induktionsspule zur induktiven Kopplung mit dem Induktionskochfeld angeordnet, wobei die Induktionsspule an der Bodeninnenseite 22 des Bodens der Außenschale 10 angeordnet ist. Die Steuerung, die Bedien- und/oder Anzeigeelemente und die Induktionsspule des Gargeschirrs 2 sind in den Fig. 1 bis 4b nicht dargestellt. Zusätzlich dazu kann das Gargeschirr ferner einen mit der Induktionsspule und mit der Steuerung sowie den Bedien- und/oder Anzeigeelementen stromleitend verbundenen, wiederaufladbaren Energiespeicher umfassen, mittels dem die von der Induktionsspule in das Gargeschirr eingekoppelte elektrische Energie zwischengespeichert werden kann, um dann bedarfsweise auf die Steuerung sowie an die Bedien- und/oder Anzeigeelemente verteilt zu werden.

Darüber hinaus weist das Gargeschirr 2 eine Mehrzahl von mit der vorgenannten Steuerung des Gargeschirrs 2 signalübertragend verbundene, als Temperatursensoren ausgebildete Sensoren 32, jeweils zur Erfassung einer Temperatur der Wandaußenseite 20 der Innenschale 12 des Gargeschirrs 2, in dem Montagezustand des Gargeschirrs 2 auf, wobei die Sensoren 32 an der Wandinnenseite 18 der Außenschale 10 angeordnet sind. Ferner ist ein weiterer als Temperatursensor ausgebildeter Sensor, zur Erfassung einer Temperatur des Bodens der Innenschale 12, an der Bodeninnenseite 22 der Außenschale 10 angeordnet, wobei dieser weitere Sensor bei dem vorliegenden Ausführungsbeispiel an dem als Zentrierdorn ausgebildeten Zentriermittel 26 angeordnet ist. Zwecks einer innigen Anlage dieses weiteren Sensors an der Bodenaußenseite 24 des Bodens der Innenschale 12 ist das Zentriermittel 26 auf nicht näher dargestellte Weise, analog zu den vorgenannten

Sensoren 32, entweder elastisch ausgebildet und/oder elastisch an der Bodeninnenseite 22 des Bodens der Außenschale 10 angeordnet. Der weitere Sensor ist in den Fig. 1 bis 4b nicht dargestellt.

Die Sensoren 32 sind, wie aus den Fig. 4a und 4b ersichtlich, über eine Höhe der Wandinnenseite 18 der Außenschale 10 verteilt angeordnet, wobei die Sensoren 32 an einem in Richtung des Bodens der Außenschale 10 auseinanderlaufenden Keil 34 angeordnet sind, und wobei der Keil 34 als ein elastischer Keil ausgebildet und an der Außenschale 10 befestigt ist. Alternativ oder zusätzlich dazu kann der Keil auf dem Fachmann bekannte Weise elastisch an der Außenschale befestigt sein.

Nachfolgend wird die Funktionsweise des erfindungsgemäßen Gargeschirrs gemäß dem vorliegenden Ausführungsbeispiel anhand der Fig. 1 bis 4b näher erläutert.

Das Gargeschirr 2 liegt zunächst in einem aus den Fig. 1 und 2 ersichtlichen Demontagezustand des Gargeschirrs 2 vor. Zwecks Überführung des Gargeschirrs 2 in den aus den Fig. 3a bis 4b ersichtlichen Montagezustand des Gargeschirrs 2 bei der Herstellung des Gargeschirrs 2 ergreift ein nicht dargestellter Monteur die Innenschale 12 und schiebt diese mit dem Boden der Innenschale 12 voraus in die Außenschale 10 derart ein, dass die Bajonettverschlussmittel 14, 16 der Außenschale 10 und der Innenschale 12 miteinander nicht in Eingriff sind. Entsprechend können die an der Innenschale 12 angeordneten Bajonettverschlussmittel 16 bei dem vorgenannten Einschieben der Innenschale 12 in die Außenschale 10 an den an der Außenschale 10 angeordneten Bajonettverschlussmitteln 14 vorbeigeführt werden, so dass die Bajonettverschlussmittel 16 der Innenschale 12 in der jeweiligen Bildebene der Fig. 3a und 3b unterhalb der Bajonettverschlussmittel 14 der Außenschale 10 angeordnet sind. Bei dem vorgenannten Einschieben der Innenschale 12 in die Außenschale 10 sorgen die Zentriermittel 26, 28 dafür, dass die Innenschale 12 zu der Außenschale 10 quer zur jeweiligen Bildebene der Fig. 3a bis 4b ordnungsgemäß ausgerichtet wird. Anschließend werden die zueinander korrespondierenden Bajonettverschlussmittel 14, 16 miteinander in Eingriff gebracht, indem der Monteur die Innenschale 12 um eine in der Fig. 3a dargestellte Drehachse 36 derart verdreht, dass die Bajonettverschlussmittel 16 der Innenschale 12 die Bajonettverschlussmittel 14 der Außenschale 10, wie aus der Fig. 3a und 3b ersichtlich, untergreifen und/oder einrasten. Das Gargeschirr 2 befindet sich in dessen aus den Fig. 3a bis 4b ersichtlichen Montagezustand.

Bei dem vorgenannten Einschieben der Innenschale 12 in die Außenschale 10 des Gargeschirrs 2 gelangen die auf dem Keil 34 angeordneten Sensoren 32 in innigen Kontakt mit der Wandaußenseite 20 der Innenschale 12. Gleiches gilt für den weiteren Temperatursensor, der an dem Zentriermittel 26 angeordnet ist.

In einem Betrieb des Gargeschirrs 2 bei auf dem Induktionskochfeld aufgestellten Gargeschirr 2 wäre es nun möglich, zum einen mittels der Sensoren 32 die Temperaturverteilung an der Wandaußenseite 20 der Innenschale 12 und zum anderen mittels des weiteren Sensors die Temperatur an der Bodenaußenseite 24 der Innenschale 12, beispielsweise für eine Ansteuerung des Induktionskochfelds, automatisch zu erfassen.

Mittels der in dem Boden der Außenschale 10 angeordneten Induktionsspule des Gargeschirrs 2 lässt sich in dem vorgenannten Betrieb des Gargeschirrs 2 darüber hinaus die Steuerung sowie die Bedien- und/oder Anzeigeelemente des Gargeschirrs 2 direkt oder indirekt, beispielsweise mittels des ebenfalls bereits genannten wiederaufladbaren Energiespeichers, mit elektrischer Energie versorgen.

Die Erfindung ist jedoch nicht auf das vorliegende Ausführungsbeispiel sowie die oben genannten Alternativen beschränkt. Siehe hierzu rein exemplarisch die Ausführungen in der Beschreibungseinleitung.

Ferner kann es bei anderen Ausführungsformen des erfindungsgemäßen Gargeschirrs vorgesehen sein, dass in dem Montagezustand des Gargeschirrs zwischen der Außenschale und der Innenschale ein thermisches Isoliermittel angeordnet ist, bevorzugt, dass das thermische Isoliermittel zwischen einer Bodeninnenseite der Außenschale und einer Bodenaußenseite der Innenschale angeordnet ist, besonders bevorzugt, dass das thermische Isoliermittel als ein Aerogel ausgebildet ist. Hierdurch ist eine wärmetechnische Entkopplung der Außenschale auf der einen Seite von der Innenschale auf der anderen Seite auf konstruktiv und fertigungstechnisch einfache Art und Weise ermöglicht. Dies gilt besonders für die bevorzugte und insbesondere für die besonders bevorzugte Ausführungsform dieser Weiterbildung. Eine derartige wärmetechnische Entkopplung ist beispielsweise dann sinnvoll oder gar erforderlich, wenn ein als Induktionsgargeschirr ausgebildetes erfindungsgemäßes Gargeschirr auf einem als voll integriertes Induktionskochfeld ausgebildeten Kochfeld betrieben werden soll. Derartige voll integrierte Induktionskochfelder sollen sich homogen in einen Wohnraum oder dergleichen einfügen, wobei die diesbezügliche Technik dieser Induktionskochfelder unter einer Stein-, Granit-, Keramikplatte oder dergleichen angeordnet ist. Entsprechend muss die Temperatur an einer dem vollintegrierten Induktionskochfeld zugewandten Bodenaußenseite eines Bodens der Außenschale des erfindungsgemäßen Gargeschirrs auf 120°C oder weniger begrenzbar sein.

Hierfür kann es alternativ oder zusätzlich zu der vorgenannten Ausführungsform des erfindungsgemäßen Gargeschirrs vorgesehen sein, dass die Außenschale auf einer in dem Montagezustand des Gargeschirrs der Innenschale abgewandten Bodenaußenseite des Bodens mindestens eine Nut aufweist, bevorzugt, dass die Nut derart ausgebildet und angeordnet ist, dass bei auf einem Kochfeld aufgestellten Gargeschirr Luft aus einer freien Umgebung mittels der Nut zwischen den Boden der Außenschale des Gargeschirrs und dem Kochfeld gelangt.

## Patentansprüche

1. Gargeschirr (2), umfassend einen Geschirrkörper (4) und mindestens einen an dem Geschirrkörper (4) angeordneten Griff (6), wobei der Geschirrkörper (4) einen in der Gebrauchslage des Gargeschirrs (2) nach oben offenen Gargutaufnahmeraum (8) zur Aufnahme eines Garguts begrenzt, wobei der Geschirrkörper (4)
eine mit dem Griff (6) verbundene oder verbindbare Außenschale (10) und eine in einem Montagezustand des Gargeschirrs (2) mit der Außenschale (10) verbundene Innenschale (12) umfasst, wobei die Außenschale (10) die Innenschale (12) in dem Montagezustand des Gargeschirrs (2) aufnimmt und der Gargutaufnahmeraum (8) in der Innenschale (12) ausgebildet ist,
**dadurch gekennzeichnet, dass**
eine in dem Montagezustand des Gargeschirrs (2) der Innenschale (12) zugewandte Wandinnenseite (18) der Außenschale (10) und eine in dem Montagezustand des Gargeschirrs (2) der Außenschale (10) zugewandte Wandaußenseite (20) der Innenschale (12) jeweils zueinander korrespondierend konisch ausgebildet sind
und
die Außenschale (10) an einer der Innenschale (12) zugewandten Bodeninnenseite (22) eines Bodens der Außenschale (10) und die Innenschale (12) an einer der Außenschale (10) zugewandten Bodenaußenseite (24) eines Bodens der Innenschale (12) jeweils zueinander korrespondierende und in dem Montagezustand des Gargeschirrs (2) miteinander in Eingriff befindliche Zentriermittel (26, 28) aufweisen
und/oder
das Gargeschirr (2) eine Mehrzahl von Sensoren (32) aufweist, welche über eine Höhe der Wandinnenseite (18) der Außenschale (10) verteilt sind, wobei die Sensoren (32) mit einer Steuerung des Gargeschirrs (2) signalübertragend verbunden sind,
und
die Sensoren (32) relativ zu der Außenschale (10) elastisch beweglich an der Außenschale (10) angeordnet sind, wobei die Mehrzahl von Sensoren (32) an einem in Richtung des Bodens der Außenschale (10) auseinanderlaufenden Keil (34) der Außenschale (10) angeordnet ist, insbesondere wobei der Keil (34) als ein elastischer Keil ausgebildet und an der Außenschale (10) befestigt ist und/oder der Keil (34) elastisch an der Außenschale (10) befestigt ist.

2. Gargeschirr (2) nach dem vorhergehenden Anspruch, wobei die Innenschale (12) in dem Montagezustand des Gargeschirrs (2) lösbar mit der Außenschale (10) verbunden ist, bevorzugt, dass die Innenschale (12) und die Außenschale (10) zueinander korrespondierende Formschlussmittel zur Ausbildung der lösbaren Verbindung aufweisen.

3. Gargeschirr nach einem der vorhergehenden Ansprüche, wobei die zueinander korrespondierenden Formschlussmittel als Bajonettverschlussmittel (14, 16) zur Bildung eines Bajonettverschlusses ausgebildet sind.

4. Gargeschirr (2) nach einem der vorhergehenden Ansprüche, wobei die Zentriermittel (26, 28) zentrisch an dem jeweiligen Boden angeordnet sind.

5. Gargeschirr (2) nach einem der vorhergehenden Ansprüche, wobei in dem Montagezustand des Gargeschirrs (2) zwischen der Außenschale (10) und der Innenschale (12) eine umlaufende Dichtung (30) angeordnet ist.

6. Gargeschirr (2) nach einem der vorhergehenden Ansprüche, wobei das Gargeschirr (2) eine Mehrzahl von Sensoren (32) aufweist, welche über eine Höhe der Wandinnenseite (18) der Außenschale (10) verteilt sind.

7. Gargeschirr (2) nach einem der vorhergehenden Ansprüche, wobei das Gargeschirr (2) als ein Induktionsgargeschirr ausgebildet ist, wobei an einem Boden der Außenschale (10) eine mit einer Steuerung des Gargeschirrs (2) elektrisch leitend verbundene Induktionsspule zur induktiven Kopplung mit einem Induktionskochfeld angeordnet ist, bevorzugt, dass die Induktionsspule an einer der Innenschale zugewandten Bodeninnenseite (22) des Bodens angeordnet ist, wobei die Außenschale (10) aus einem elektrisch nicht leitfähigen Material ausgebildet ist.

8. Gargeschirr (2) nach einem der vorhergehenden Ansprüche, wobei die Innenschale (12) oder die Innenschale und die Außenschale aus einem spülmaschinengeeigneten Material ausgebildet ist/sind.

9. Gargeschirr (2) nach einem der vorhergehenden Ansprüche, wobei die Sensoren (32) an einer, jeweils der Innenschale (12) zugewandten, Wandinnenseite (18) und/oder Bodeninnenseite (22) der Außenschale (10) angeordnet sind.

10. Gargeschirr (2) nach einem der vorhergehenden Ansprüche, wobei die Sensoren (32) an der Außenschale (10) elastisch angeordnet sind.

11. Gargeschirr nach einem der vorhergehenden Ansprüche, wobei in dem Montagezustand des Gargeschirrs zwischen der Außenschale und der Innenschale ein thermisches Isoliermittel angeordnet ist, bevorzugt, dass das thermische Isoliermittel zwischen einer Bodeninnenseite der Außenschale und einer Bodenaußenseite der Innenschale angeordnet ist, besonders bevorzugt, dass das thermische Isoliermittel als ein Aerogel ausgebildet ist.

12. Gargeschirr nach einem der vorhergehenden Ansprüche, wobei die Außenschale auf einer in dem Montagezustand des Gargeschirrs der Innenschale abgewandten Bodenaußenseite des Bodens mindestens eine Nut aufweist, bevorzugt, dass die Nut derart ausgebildet und angeordnet ist, dass bei auf einem Kochfeld aufgestellten Gargeschirr Luft aus einer freien Umgebung mittels der Nut zwischen den Boden der Außenschale des Gargeschirrs und dem Kochfeld gelangt.

## Claims

1. Cooking vessel (2), comprising a vessel body (4) and at least one handle (6) arranged on the vessel body (4), the vessel body (4) delimiting a space (8) for receiving food to be cooked, which space is open at the top in the use position of the cooking vessel (2) and is intended for receiving food to be cooked, **characterized in that** the vessel body (4) comprises an outer shell (10) which is or can be connected to the handle (6), and an inner shell (12) which is connected to the outer shell (10) when the cooking vessel (2) is assembled, the outer shell (10) receiving the inner shell (12) when the cooking vessel (2) is assembled, and the space (8) for receiving food to be cooked being formed in the inner shell (12),
**characterized in that**
a wall inner face (18) of the outer shell (10), which faces the inner shell (12) when the cooking vessel (2) is assembled, and a wall outer face (20) of the inner shell (12), which faces the outer shell (10) when the cooking vessel (2) is assembled, are in each case designed conically in a mutually corresponding manner, and
the outer shell (10), on a base inner face (22) of a base of the outer shell (10) facing the inner shell (12), and the inner shell (12), on a base outer face (24) of a base of the inner shell (12) facing the outer shell (10), in each case comprise mutually corresponding centering means (26, 28) which are in engagement with one another when the cooking vessel (2) is assembled,
and/or
the cooking vessel (2) has a plurality of sensors (32) which are arranged distributed over a height of the wall inner face (18) of the outer shell (10), the sensors (32) being connected to a controller of the cooking vessel (2) in a signal-transmitting manner, and
the sensors (32) being arranged on the outer shell (10) so as to be movable, relative to the outer shell (10), in a resilient manner, wherein the plurality of sensors is arranged on a wedge (34) of the outer shell (10) that diverges in the direction of the base of the outer shell (10), in particular wherein the wedge (34) is designed as a resilient wedge and is fastened to the outer shell (10) and/or the wedge (34) is resiliently fastened to the outer shell (10).

2. Cooking vessel (2) according to the preceding claim, wherein the inner shell (12) is releasably connected to the outer shell (10) when the cooking vessel (2) is assembled, preferably that the inner shell (12) and the outer shell (10) have mutually corresponding interlocking means for forming the releasable connection.

3. Cooking vessel according to any of the preceding claims, wherein the mutually corresponding interlocking means are designed as bayonet locking means (14, 16) for forming a bayonet closure.

4. Cooking vessel (2) according to any of the preceding claims, wherein the centering means (26, 28) are arranged centrally on the relevant base.

5. Cooking vessel (2) according to any of the preceding claims, wherein a peripheral seal (30) is arranged between the outer shell (10) and the inner shell (12) when the cooking vessel (2) is assembled.

6. Cooking vessel (2) according to any of the preceding claims, wherein the cooking vessel (2) comprises a plurality of sensors (32) which are distributed over a height of the wall inner face (18) of the outer shell (10).

7. Cooking vessel (2) according to any of the preceding claims, wherein the cooking vessel (2) is designed as an induction cooking vessel, wherein a induction coil which is electrically conductively connected to a controller of the cooking vessel (2) is arranged on a base of the outer shell (10) for inductive coupling to an induction hob, preferably that the induction coil is arranged on a base inner face (22) of the base facing the inner shell, wherein the outer shell (10) is made of an electrically non-conductive material.

8. Cooking vessel (2) according to any of the preceding claims, wherein the inner shell (12) or the inner shell and the outer shell is/are formed from a material suitable for a dishwasher.

9. Cooking vessel (2) according to any of the preceding claims, wherein the sensor (32) is arranged on a wall inner face (18) and/or base inner face (22) of the outer shell (10), the faces facing the inner shell (12) in each case.

10. Cooking vessel (2) according to any of the preceding claims, wherein the sensor (32) is resiliently arranged on the outer shell (10).

11. Cooking vessel according to any of the preceding claims, wherein a thermal insulation means is arranged between the outer shell and the inner shell when the cooking vessel is assembled, preferably that the thermal insulation means is arranged between a base inner face of the outer shell and a base outer face of the inner shell, particularly preferably that the thermal insulation means is designed as an aerogel.

12. Cooking vessel according to any of the preceding claims, wherein the outer shell has at least one groove on a base outer face of the base facing away from the inner shell when the cooking vessel is assembled, preferably that the groove is designed and arranged such that, when the cooking vessel is placed on a hob, air from a free environment passes between the base of the outer shell of the cooking vessel and the hob by means of the groove.

## Revendications

1. Ustensile de cuisson (2), comprenant un corps d'ustensile (4) et au moins une poignée (6) disposée sur le corps d'ustensile (4), dans lequel le corps d'ustensile (4) délimite un espace de réception de produit à cuire (8) ouvert vers le haut dans la position d'utilisation de l'ustensile de cuisson (2) et permettant la réception d'un produit à cuire, dans lequel le corps d'ustensile (4)
comprend une coque extérieure (10) reliée ou pouvant être reliée à la poignée (6) et une coque intérieure (12) reliée à la coque extérieure (10) dans un état de montage de l'ustensile de cuisson (2), dans lequel la coque extérieure (10) reçoit la coque intérieure (12) dans l'état de montage de l'ustensile de cuisson (2) et l'espace de réception d'un produit à cuire (8) est réalisé dans la coque intérieure (12),
**caractérisé en ce que**
une face intérieure de paroi (18) de la coque extérieure (10), laquelle face intérieure de paroi est tournée vers la coque intérieure (12) dans l'état de montage de l'ustensile de cuisson (2), et une face extérieure de paroi (20) de la coque intérieure (12), laquelle face extérieure de paroi est tournée vers la coque extérieure (10) dans l'état de montage de l'ustensile de cuisson (2), sont réalisées de manière conique en se correspondant respectivement l'une l'autre et
la coque extérieure (10) présente, sur une face intérieure de fond (22) d'un fond de la coque extérieure (10), laquelle face intérieure de fond est tournée vers la coque intérieure (12), et la coque intérieure (12) présente, sur une face extérieure de fond (24) d'un fond de la coque intérieure (12), laquelle face extérieure de fond est tournée vers la coque extérieure (10), des moyens de centrage (26, 28) se correspondant respectivement l'un l'autre et se trouvant en prise l'un avec l'autre dans l'état de montage de l'ustensile de cuisson (2)
et/ou
l'ustensile de cuisson (2) présente une pluralité de capteurs (32) qui sont répartis sur une hauteur de la face intérieure de paroi (18) de la coque extérieure (10), dans lequel les capteurs (32) sont reliés à une commande de l'ustensile de cuisson (2) de manière à transmettre un signal,
et
les capteurs (32) sont disposés sur la coque extérieure (10) de manière à pouvoir se déplacer de manière élastique par rapport à la coque extérieure (10), dans lequel la pluralité de capteurs (32) est disposée sur une cale (34) de la coque extérieure (10), laquelle cale diverge en direction du fond de la coque extérieure (10), en particulier dans lequel la cale (34) est réalisée sous la forme d'une cale élastique et est fixée à la coque extérieure (10) et/ou la cale (34) est fixée de manière élastique à la coque extérieure (10).

2. Ustensile de cuisson (2) selon la revendication précédente, dans lequel la coque intérieure (12) est reliée de manière amovible à la coque extérieure (10) dans l'état de montage de l'ustensile de cuisson (2), de préférence **en ce que** la coque intérieure (12) et la coque extérieure (10) présentent des moyens de liaison par complémentarité de forme se correspondant l'un l'autre pour la réalisation de la liaison amovible.

3. Ustensile de cuisson selon l'une des revendications précédentes, dans lequel les moyens de liaison par complémentarité de forme se correspondant l'un l'autre sont réalisés sous la forme de moyens de verrouillage par baïonnette (14, 16) pour la formation d'un verrouillage par baïonnette.

4. Ustensile de cuisson (2) selon l'une des revendications précédentes, dans lequel les moyens de centrage (26, 28) sont disposés de manière centrée sur le fond respectif.

5. Ustensile de cuisson (2) selon l'une des revendications précédentes, dans lequel un joint d'étanchéité circonférentiel (30) est disposé entre la coque extérieure (10) et la coque intérieure (12) dans l'état de montage de l'ustensile de cuisson (2).

6. Ustensile de cuisson (2) selon l'une des revendications précédentes, dans lequel l'ustensile de cuisson (2) présente une pluralité de capteurs (32) qui sont répartis sur une hauteur de la face intérieure de paroi (18) de la coque extérieure (10).

7. Ustensile de cuisson (2) selon l'une des revendications précédentes, dans lequel l'ustensile de cuisson (2) est réalisé sous la forme d'un ustensile de cuisson à induction, dans lequel une bobine d'induction connectée de manière électriquement conductrice à une commande de l'ustensile de cuisson (2) est disposée sur un fond de la coque extérieure (10) pour le couplage inductif à une plaque de cuisson à induction, de préférence **en ce que** la bobine d'induction est disposée sur une face intérieure de fond (22) tournée vers la coque intérieure, dans lequel la coque extérieure (10) est réalisée en un matériau électriquement non conducteur.

8. Ustensile de cuisson (2) selon l'une des revendications précédentes, dans lequel la coque intérieure (12) ou la coque intérieure et la coque extérieure sont réalisées en un matériau adapté au lave-vaisselle.

9. Ustensile de cuisson (2) selon l'une des revendications précédentes, dans lequel les capteurs (32) sont disposés sur une face intérieure de paroi (18) et/ou sur une face intérieure de fond (22) de la coque extérieure (10), lesquelles sont respectivement tournées vers la coque intérieure (12).

10. Ustensile de cuisson (2) selon l'une des revendications précédentes, dans lequel les capteurs (32) sont disposés de manière élastique sur la coque extérieure (10).

11. Ustensile de cuisson selon l'une des revendications précédentes, dans lequel un moyen d'isolation thermique est disposé entre la coque extérieure et la coque intérieure dans l'état de montage de l'ustensile de cuisson, de préférence **en ce que** le moyen d'isolation thermique est disposé entre une face intérieure de fond de la coque extérieure et une face extérieure de fond de la coque intérieure, de manière particulièrement préférée **en ce que** le moyen d'isolation thermique est réalisé sous la forme d'un aérogel.

12. Ustensile de cuisson selon l'une des revendications précédentes, dans lequel la coque extérieure présente au moins une rainure sur une face extérieure de fond opposée à la coque intérieure dans l'état de montage de l'ustensile de cuisson, de préférence **en ce que** la rainure est réalisée et disposée de telle sorte que, lorsque l'ustensile de cuisson est posé sur une plaque de cuisson, de l'air provenant d'un environnement libre parvient, au moyen de la rainure, entre le fond de la coque extérieure de l'ustensile de cuisson et la plaque de cuisson.
